# FASCICULE DE BREVET EUROPEEN

(11) **EP 3 555 428 B1**
(45) Date de publication et mention de la délivrance du brevet: **27.01.2021**
(21) Numéro de dépôt: 17822405.1
(22) Date de dépôt: 13.12.2017
(51) Int. Cl.: F01D 25/18, F28F 27/02, F01M 5/00

(54) **CIRCUIT FLUIDIQUE DANS UNE TURBOMACHINE**
FLÜSSIGKEITSKREISLAUF IN EINEM TURBINENTRIEBWERK
FLUID CIRCUIT IN A TURBINE ENGINE

(30) Priorité: 14.12.2016 FR 1662441
(43) Date de publication de la demande: 23.10.2019
(73) Titulaire: Safran Aircraft Engines, 75015 Paris (FR)
(72) Inventeur: POTEL, Nicolas, Alain, Bernard, 77550 Moissy-Cramayel (FR); GUILLOU, Lancelot, 77550 Moissy-Cramayel (FR)
(74) Mandataire: Ernest Gutmann - Yves Plasseraud S.A.S.
(86) Numéro de dépôt international: PCT/FR2017/053536
(87) Numéro de publication internationale: WO 2018/109374

(56) Documents cités:
- WO-A1-2013/178956
- GB-A- 2 485 653
- US-A- 3 034 770

## Description

La présente invention concerne un circuit d'huile dans une turbomachine ainsi qu'une turbomachine équipée d'un tel circuit d'huile. Le document GB2485653 A divulgue un ensemble pour turbomachine comportant un circuit d'huile.

Comme tous les moteurs à combustion interne, les turbomachines, qu'il s'agisse de turboréacteurs ou de turbopropulseurs, comprennent des pièces mobiles qui frottent contre d'autres pièces mobiles ou contre des pièces fixes.

Pour ne pas se rompre à cause de réchauffement dû aux frottements, les pièces sont arrosées d'huile qui permet d'une part de limiter (ou contenir) leur échauffement et, d'autre part, de les lubrifier pour faciliter le glissement des pièces les unes sur les autres.

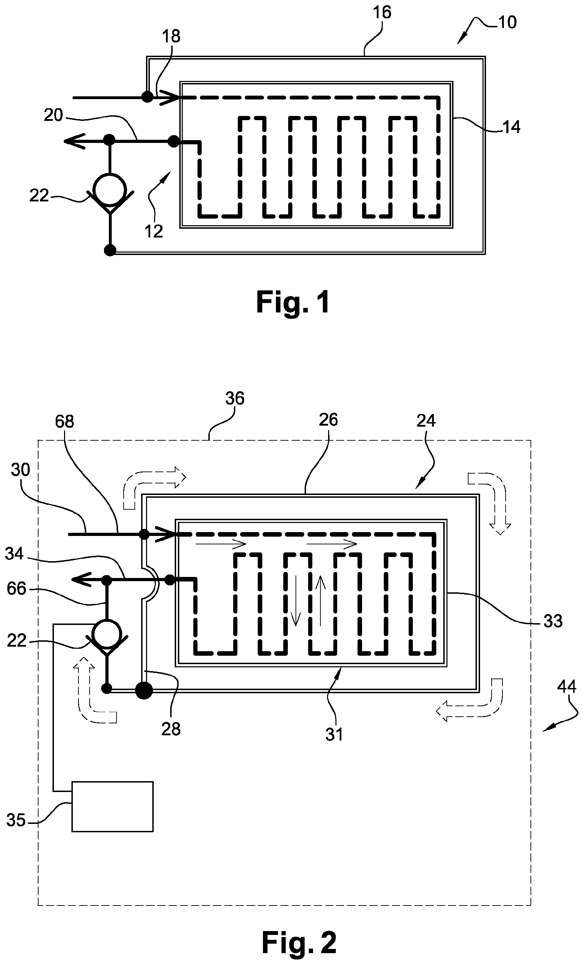

L'huile circule dans un circuit 10 pourvu d'échangeurs thermiques, notamment des échangeurs huile/air 12, comme représenté en figure 1, ayant une matrice 14, sous la forme d'une conduite sinueuse conformée de manière à réaliser un échange de chaleur, dans laquelle l'huile provenant desdites pièces est introduite puis refroidie avant d'être de nouveau injectée sur lesdites pièces.

Lors d'un démarrage d'une turbomachine en conditions froides (par exemple avec une température inférieure à 0°C), l'huile de la matrice 14 de l'échangeur air/huile 12 (ou des échangeurs le cas échant) peut être gelée rendant difficile voire impossible l'échange thermique entre l'huile et l'air puisque l'huile ne peut circuler dans la matrice 14 de l'échangeur 12. Il est alors nécessaire de réchauffer préalablement la matrice 14 de l'échangeur 12 de chaleur air/huile.

Pour cela, il est connu de pourvoir l'échangeur de chaleur 12 air/huile d'une conduite de dérivation 16 servant de canal de décongélation et qui entoure la matrice 14 de l'échangeur 12 de chaleur air/huile de manière à réchauffer l'huile gelée. Cette conduite 16 de dérivation est reliée à son extrémité amont à l'entrée 18 de l'échangeur 12 de chaleur et à la sortie 20 de l'échangeur 12 de chaleur. Le circuit d'huile 10 comprend également une vanne 22 de commande du débit d'huile dans la conduite de dérivation 16 afin de n'autoriser la circulation d'huile dans la matrice 14 de l'échangeur 12 que lorsque la température est inférieure à un seuil prédéterminé. Toutefois, la section de passage d'huile de la conduite de dérivation 16 étant inférieure à la section de passage d'huile dans l'échangeur de chaleur air/huile, il existe une surpression dans le circuit d'huile lorsque la matrice 14 de l'échangeur 12 est gelée. La surpression induit un risque d'endommagement du circuit d'huile 10.

Afin de réduire cette surpression, une solution évidente est d'augmenter la section de passage de la conduite de dérivation 16 de manière à augmenter le débit sans pour autant modifier les conditions de pression de fonctionnement des pompes d'alimentation. Toutefois, pour des raisons d'encombrement, l'augmentation de la section de passage de la conduite de dérivation 16 n'est pas envisageable.

L'invention a notamment pour but d'apporter une solution simple, efficace et économique à ce problème.

A cet effet, l'invention propose, un ensemble pour turbomachine comprenant un circuit d'huile comportant un échangeur thermique air/huile, une conduite primaire de dérivation reliant une entrée de l'échangeur thermique air/huile à une sortie de l'échangeur thermique air/huile et entourant l'échangeur thermique air/huile de manière à échanger de la chaleur avec l'échangeur thermique air/huile, et une conduite secondaire de dérivation de la conduite primaire reliant l'amont de la conduite primaire de dérivation à l'aval de la conduite primaire de dérivation, le circuit comprenant également au moins une vanne de commande du passage du débit d'huile dans les conduites primaire et secondaire de dérivation et des moyens de pilotage de l'ouverture de ladite au moins une vanne pour une température inférieure à une température seuil.

Selon l'invention, l'ajout d'un conduit secondaire de dérivation permet de dériver une partie du fluide de la conduite de dérivation primaire, ce qui permet de réduire la pression en fluide dans la conduite primaire de dérivation en conditions froides de fonctionnement. L'association d'une vanne de commande du passage du débit d'huile dans les conduites primaire et secondaire de dérivation et de moyens de pilotage de l'ouverture de la vanne pour une température supérieure à une température seuil, permet de rendre opérantes les conduites de dérivation primaire et secondaire uniquement en conditions froides de fonctionnement, aucun débit d'huile ne circulant dans ces conduites lorsque la température est supérieure à la température seuil prédéterminée.

La perte de charge augmentant avec la diminution de la température du fait de l'augmentation de la viscosité de l'huile, on comprend que l'ajout d'une conduite secondaire de dérivation est particulièrement utile. Toutefois, cette conduite secondaire impacte peu la fonction de réchauffement de l'huile de l'échangeur air/huile par la conduite primaire. A titre d'exemple, une dérivation de 30% du débit d'huile de la conduite primaire de dérivation dans la conduite secondaire de dérivation permet de conserver un même temps de décongélation avec l'échangeur de chaleur.

Selon une autre caractéristique de l'invention, l'ensemble comprend une seule vanne agencée en sortie de la conduite primaire de dérivation et en aval de la sortie de la conduite secondaire de dérivation. Il serait bien évidemment possible d'avoir une vanne pour chacune de la conduite de dérivation primaire et de la conduite de dérivation secondaire. Toutefois, cela complique à l'évidence le montage.

Dans une autre réalisation, l'unique vanne pourrait être agencée en entrée de la conduite primaire de dérivation et en amont de l'entrée de la conduite secondaire de dérivation.

La vanne de commande peut être une vanne pouvant adopter au moins deux positions dont une première position ouverte autorise le passage d'huile et une seconde position fermée bloque le passage d'huile. La température seuil est par exemple de l'ordre de 70°C.

Dans une autre réalisation, la vanne de commande peut être une vanne unidirectionnelle à deux voies pouvant adopter au moins deux positions, une première position ouverte autorise le passage d'huile au travers de la vanne et une seconde position fermée bloque le passage d'huile au travers de la vanne, mais également des positions intermédiaires.

Selon une autre caractéristique de l'invention, la conduite secondaire de dérivation peut présenter une longueur au moins dix fois inférieure à la longueur de la conduite primaire de dérivation. Egalement, le circuit comprend la conduite secondaire de dérivation qui peut avoir un diamètre au moins trois fois inférieur au diamètre de la conduite primaire de dérivation.

Le fait d'avoir une conduite secondaire de dérivation plus courte et/ou ayant un diamètre plus faible que la conduite primaire de dérivation, selon les ratios précités, permet d'avoir une bonne répartition de débit entre la conduite primaire de dérivation et la conduite secondaire de dérivation afin d'abaisser la perte de charge dans la conduite primaire tout en assurant une bonne décongélation de l'échangeur thermique.

En outre, une conduite secondaire de dérivation plus courte et/ou ayant un diamètre plus faible selon les ratios précités, permet d'éviter une surpression dans le circuit d'huile lorsque la matrice de l'échangeur d'huile est gelée sans avoir à augmenter la section de la conduite primaire de dérivation. Ainsi, l'encombrement et la masse de la conduite primaire de dérivation sont réduits.

Une conduite secondaire de dérivation ayant une longueur plus faible sera privilégiée du fait de la réduction de masse induite. De plus, cela s'avère très avantageux lorsque l'entrée et la sortie sont agencées à proximité immédiate l'une de l'autre. Le diamètre de la conduite secondaire de dérivation est ainsi ajusté en fonction de la longueur de la conduite de manière à assurer une bonne répartition du flux d'huile dans les conduites primaire et secondaire de dérivation.

L'invention concerne encore une turbomachine comprenant un circuit d'huile tel que décrit précédemment, dans laquelle l'échangeur thermique huile/air délimite radialement vers l'extérieur une surface d'écoulement d'un flux d'air secondaire.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une représentation schématique d'un circuit d'huile selon la technique antérieure et déjà décrit précédemment ;
- la figure 2 est une représentation schématique d'un circuit d'huile selon l'invention, la vanne étant dans une position d'ouverture ;
- la figure 3 est une représentation schématique d'un circuit d'huile selon l'invention, la vanne étant dans une position de fermeture ;
- la figure 4 est une vue schématique en perspective depuis l'aval d'une turbomachine comprenant un échangeur de chaleur selon l'invention ;
- la figure 5 est une vue schématique en coupe du positionnement d'un échangeur de chaleur dans une veine de la turbomachine ;
- la figure 6a est une vue schématique d'un ensemble selon l'invention ;
- la figure 6b représente une vue en coupe de l'ensemble selon un plan radial.
- la figure 7 est une vue schématique en perspective et en coupe selon un plan radial de l'ensemble de la figure 6a.

On se réfère à la figure 2 qui représente un circuit d'huile 24 selon l'invention. Dans la présente description, le terme échangeur fait référence à un moyen qui est apte à échanger de la chaleur entre deux entités. Classiquement un carter structural entoure le moyen d'échange de chaleur, l'ensemble pouvant dès lors être qualifié d'échangeur de chaleur sans pour autant que le carter structural participe activement à l'échange de chaleur. Ainsi, on comprend bien que l'invention couvre également ce type produit.

Comme cela est visible sur la figure 2, le circuit d'huile 24 comprend une conduite primaire 26 de dérivation identique à la conduite 16 de dérivation de la figure 1 et une conduite secondaire 28 de dérivation qui relie l'amont de la conduite primaire 26 de dérivation à l'aval de la conduite primaire 26 de dérivation. Plus précisément, l'extrémité amont de la conduite primaire 26 de dérivation et l'extrémité amont de la conduite secondaire 28 de dérivation sont reliées l'une à l'autre à l'entrée de la conduite d'alimentation 30 de l'échangeur 31 de chaleur ou plus spécifiquement de la matrice 33 de l'échangeur 31 de chaleur.

L'extrémité aval de la conduite primaire 26 de dérivation est reliée à l'entrée d'une vanne 22 dont l'ouverture/fermeture est commandée par des moyens de pilotage 35 autorisant/bloquant la circulation de fluide au travers de la vanne 22 pour une température d'huile inférieure à une température seuil donnée, par exemple de 70°C. Dans un mode de réalisation particulier de l'invention, les moyens de de pilotage de la vanne sont passifs et sont constitués de cire apte à varier en volume en fonction de la température environnante. La variation en volume de la cire au sein de la vanne permet de sélectivement laisser passer l'huile à travers la vanne ou de bloquer l'écoulement d'huile en amont de la vanne. La sortie de la vanne 22 est reliée à une conduite de sortie 34 de la matrice de l'échangeur de chaleur.

Dans une variante de réalisation (non représentée), la vanne 22 pourrait être montée en amont de l'extrémité amont de la conduite primaire 26 de dérivation de manière à autoriser la circulation de fluide dans la conduite primaire 26 de dérivation pour une température inférieure à la température seuil et interdire la circulation d'huile pour une température supérieure à la température seuil, la circulation d'huile étant autorisée dans la conduite d'alimentation 30 de la matrice d'huile quelle que soit la température. Dans cette configuration, l'extrémité amont de la conduite secondaire 28 de dérivation est reliée à la sortie de la vanne 22 ou à l'aval de l'extrémité aval de la conduite primaire 26 de dérivation.

Dans encore une autre réalisation de l'invention, il serait possible d'utiliser une vanne pour chaque conduire primaire 26 et secondaire 28 de dérivation, ces vannes étant alors commandées simultanément en ouverture et fermeture par les moyens de pilotage.

Dans la réalisation de la figure 2, la vanne 22 est de préférence une vanne unidirectionnelle tout ou rien comprenant deux positions dont l'une autorise la circulation d'huile dans les conduites primaire 26 et secondaire 28 de dérivation et l'autre interdit la circulation dans lesdites conduites 26, 28. Il serait encore possible d'utiliser un distributeur piloté à deux orifices et deux positions.

La circulation de l'huile dans la matrice 33 est représentée par les flèches en traits pleins sur la figure 2.

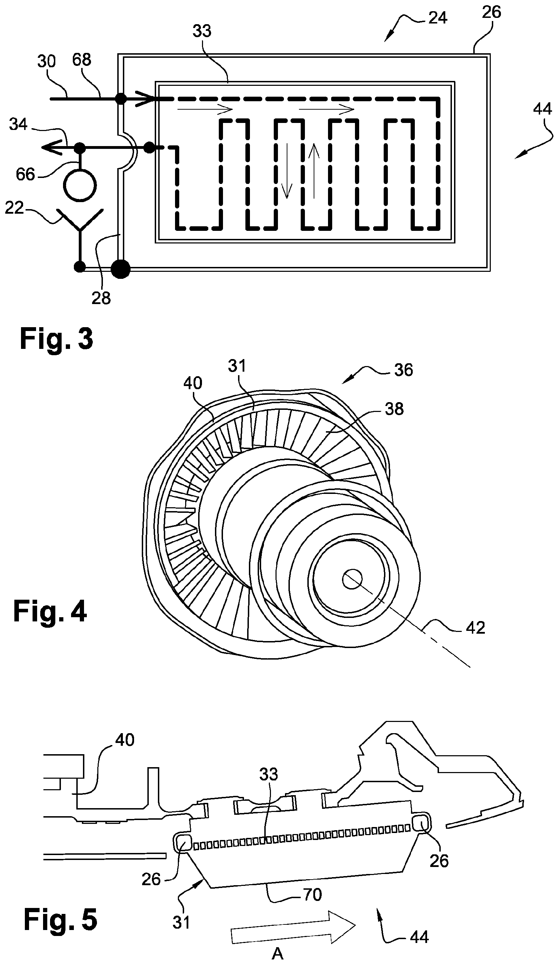

Selon l'invention, lorsque l'huile de la matrice 33 est gelée, l'huile circule dans la conduite primaire 26 et dans la conduite secondaire 28 comme représenté par les flèches en traits pointillés sur les figures 2 et 3.

La double circulation d'huile dans la conduite primaire 26 et dans la conduite secondaire 28 permet d'augmenter le débit d'huile en mouvement lorsque la matrice 33 est gelée, ce qui réduit la surpression dans le circuit d'huile 24, plus particulièrement dans la conduite primaire pour un débit d'huile donné circulant dans la conduite d'alimentation 34.

De préférence, la conduite secondaire 28 présente une section de passage d'huile inférieure ou égal au diamètre de la section de passage d'huile de la conduite primaire 26 afin que l'huile circule principalement dans la conduite primaire 26 et ainsi garantir la décongélation de la matrice 33.

De même, on comprend que la conduite secondaire doit être le plus court possible pour abaisser la perte de charge dans la conduite primaire tout en assurant une bonne décongélation. Ainsi, à titre d'exemple, la conduite secondaire peut être définie par une longueur au moins dix fois inférieure à celle de la conduite primaire, et/ou un diamètre trois fois inférieur à la première conduite.

La figure 4 représente une turbomachine 36 vu depuis l'aval de celle-ci (selon le sens du flux d'air) comprenant une roue de soufflante 38 et l'échangeur de chaleur air/huile 31 porté par un carter annulaire 40 externe de la veine d'écoulement d'air secondaire (flèche A sur la figure 5). Comme cela est mieux visible sur la figure 5, l'échangeur de chaleur 31 est porté par le carter 40 et sa matrice est agencée de manière à former une surface radialement externe d'écoulement du flux d'air secondaire de la turbomachine, c'est-à-dire le flux d'air contournant les compresseurs basse et haute pression, la chambre de combustion et les turbines haute et basse pression.

En pratique, on comprend que l'échangeur 31 de chaleur air/huile a la forme d'un anneau agencé autour de l'axe 42 de la turbomachine 36.

Dans la description le terme de « conduite secondaire » doit s'entendre comme concernant tout passage de fluide permettant de faire circuler de l'huile entre l'amont et l'aval de la conduite primaire.

Ainsi, dans l'échangeur de chaleur décrit précédemment, le conduit secondaire peut être un simple orifice réalisé dans une paroi séparant l'huile circulant dans la conduite d'alimentation 30 et l'huile circulant dans la partie aval de la conduite primaire 33.

Dans une réalisation de l'invention, le conduit primaire à un diamètre de l'ordre de 12 mm et la conduite secondaire est un orifice comme indiqué au paragraphe précédent et a un diamètre de 5 mm.

La longueur de la conduite primaire est, dans un exemple de réalisation, de l'ordre de plusieurs mètres.

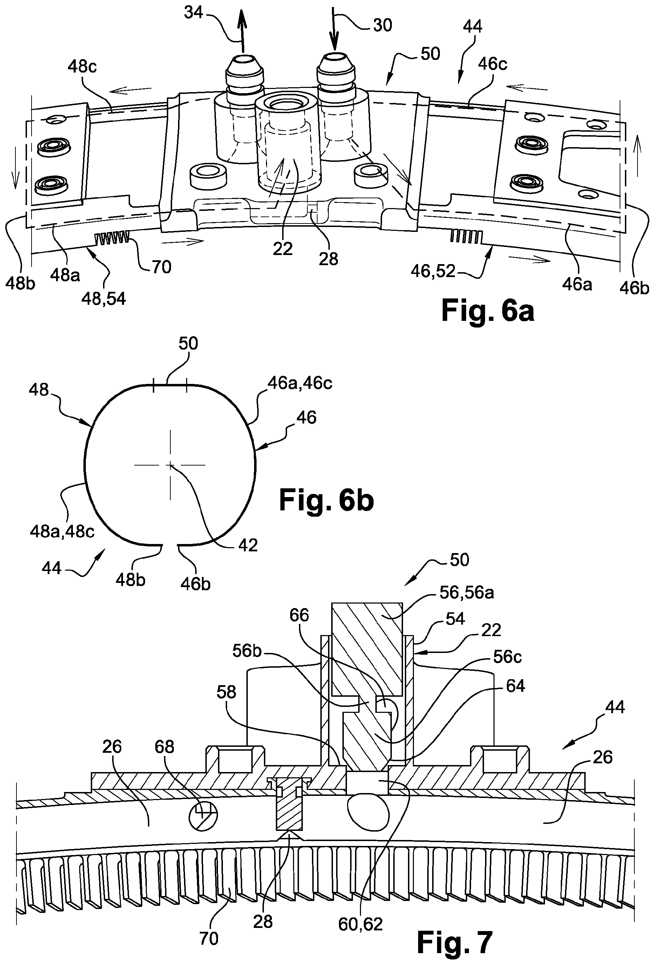

La figure 6a représente un ensemble 44 selon l'invention comprenant un boitier formé d'un premier demi-anneau 46 et d'un second demi-anneau reliés 48 l'un à l'autre par une partie centrale 50. Cet ensemble 44 comprend, comme décrit précédemment, un circuit d'huile 24 et une matrice 33 d'échange de chaleur ainsi que des ailettes 70 de refroidissement agencées sur la face radialement interne de la matrice d'huile 33. La partie centrale comprend une entrée d'huile 30 dans la matrice 33, une sortie d'huile 34 de la matrice 33 et la vanne unidirectionnelle 22. Comme décrit précédemment, l'entrée d'huile 30 alimente également la conduite primaire 26 et la conduite secondaire 28 et la sortie d'huile 34 est reliée à la sortie de la vanne unidirectionnelle 22 ou plus généralement à une sortie de la vanne 22.

Le premier demi-anneau 46 comprend une première branche 46a semi-circulaire de conduite et un seconde branche 46c semi-circulaire de conduite reliées l'une à l'autre par une branche de liaison 46b formée à l'extrémité circonférentielle opposée à la partie centrale 50 (figure 6b). La première branche 46a est formée en amont de la seconde branche 46c et la branche de liaison 46b du premier demi-anneau 46 s'étend sensiblement axialement. La première branche 46a, la seconde branche 46c et la branche de liaison 46b forment ensemble une première partie 52 de la conduite primaire 26 de dérivation.

Le second demi-anneau 48 comprend première branche 48a semi-circulaire de conduite et un seconde branche 48c semi-circulaire de conduite reliées l'une à l'autre par une branche 48b de liaison formée à l'extrémité circonférentielle opposée à la partie centrale 50. La première branche 48a est formée en amont de la seconde branche 48c et la branche de liaison 48b s'étend sensiblement axialement. La première branche 48a, la seconde branche 48c et la branche de liaison 48b du second demi-anneau 48 forment ensemble une seconde partie 54 de la conduite primaire 26 de dérivation. La première partie 52 de la conduite primaire de dérivation et la seconde partie 54 de la conduite primaire de dérivation définissent ensemble intégralement la conduite primaire 26 de dérivation.

Plus spécifiquement comme représenté en figure 7, la partie centrale 50 porte la vanne 22 qui comprend un corps tubulaire 54 dans le lequel est monté à coulissement un piston 56 entre une première position d'appui sur un siège 58 obturant l'écoulement d'huile entre la sortie 60 de la conduite primaire 26 et la sortie 34 de la matrice 33 et une seconde position dans laquelle le piston 56 est éloignée du siège 58 et autorise la circulation d'huile. Le piston 56 comprend une première 56a partie radialement externe coulissant à étanchéité dans le corps et reliée par une tige 56b à une tête 56c du piston destinée à venir en appui sur le siège 58 ou pourtour de l'orifice de sortie 62. Cette tête comprend un chanfrein 64 annulaire d'appui sur le pourtour de l'orifice 62. Lorsque l'huile s'écoule au travers de l'ouverture 60, elle s'écoule ensuite au travers de la conduite 66 pour rejoindre la sortie 34 de la matrice d'huile 33.

Comme représenté sur la figure 7, la conduite secondaire 28 relie l'extrémité amont de la conduite primaire 26 à l'extrémité aval de la conduite primaire 26. Cette figure représente également l'orifice d'entrée 68 d'huile dans la conduite primaire 26, cet orifice 68 étant relié à l'entrée d'huile 30 de la matrice 33.

La conduite primaire 26 et la conduite secondaire 28 sont alimentées par l'entrée d'huile 30 de la matrice 33. L'huile présente dans la conduite primaire 26 et la conduite secondaire 28 s'écoule alors jusqu'à la vanne 22 qui bloque l'huile au niveau de la sortie 60 de la conduite primaire 26 ou permet à l'huile de s'échapper par la sortie 34 de la matrice d'huile 33.

L'écoulement dans la conduite primaire 26 comprend plus particulièrement, un écoulement dans le premier demi-anneau 46 puis dans le second demi-anneau 48 avant de rejoindre la vanne 22. Plus spécifiquement, l'huile s'écoule dans la première branche 46a semi-circulaire, puis la branche de liaison 46b et enfin la seconde branche 46c semi-circulaire du premier demi anneau 46. Une fois que l'huile est à l'extrémité aval de la seconde branche 46c semi-circulaire du premier demi-anneau 46, l'huile circule par la suite dans le second demi-anneau 48 au niveau de la seconde branche 48c semi-circulaire, puis de la branche de liaison 48b et enfin de la première branche 48a semi-circulaire avant de rejoindre la sortie 34 de la matrice d'huile 33 par le biais de la vanne 22.

## Revendications

1. Ensemble (44) pour turbomachine (36), comprenant un circuit d'huile comportant un échangeur thermique air/huile (31), une conduite primaire (26) de dérivation reliant une entrée de l'échangeur thermique air/huile (31) à une sortie de l'échangeur thermique air/huile (31) et entourant l'échangeur thermique air/huile (31) de manière à échanger de la chaleur avec l'échangeur thermique air/huile (31) et une conduite secondaire (28) de dérivation de la conduite primaire (26) reliant l'amont de la conduite primaire (26) de dérivation à l'aval de la conduite primaire (26) de dérivation, le circuit (24) comprenant également au moins une vanne (22) de commande du passage du débit d'huile dans les conduites primaire (26) et secondaire (28) de dérivation et des moyens de pilotage (35) de l'ouverture de ladite au moins une vanne (22) pour une température inférieure à une température seuil, **caractérisé en ce que** ladite conduite secondaire (28) de dérivation a une longueur au moins dix fois inférieure à la longueur de la conduite primaire (26) de dérivation.

2. Ensemble selon la revendication 1, dans lequel le circuit comprend une seule vanne (22) agencée en sortie de la conduite primaire (26) de dérivation et en aval de la sortie de la conduite secondaire (28) de dérivation.

3. Ensemble selon l'une des revendications 1 à 2, dans lequel la vanne (22) de commande est une vanne pouvant adopter au moins deux positions dont une première position ouverte autorise le passage d'huile et une seconde position fermée bloque le passage d'huile au travers de la vanne (22).

4. Ensemble selon l'une quelconque des revendications 1 à 3, dans lequel la température seuil est de 70°C.

5. Ensemble selon l'une quelconque des revendications 1 à 4, dans lequel la vanne (22) de commande est une vanne (22) unidirectionnelle à deux voies.

6. Ensemble selon l'une quelconque des revendications 1 à 5, dans lequel la conduite secondaire (28) de dérivation présente un diamètre au moins trois fois inférieur au diamètre de la conduite primaire (26) de dérivation.

7. Turbomachine comprenant un ensemble selon l'une quelconque des revendications 1 à 6, dans laquelle l'échangeur thermique huile/air délimite radialement vers l'extérieur une surface d'écoulement d'un flux d'air secondaire.

## Patentansprüche

1. Baugruppe (44) für eine Turbomaschine (36) mit einem Ölkreislauf, der einen Luft/Öl-Wärmetauscher (31), eine primäre Abzweigleitung (26), die einen Einlass des Luft/Öl-Wärmetauschers (31) mit einem Auslass des Luft/Öl-Wärmetauschers (31) verbindet und so um den Luft/Öl-Wärmetauscher (31) geführt ist, dass Wärme mit dem Luft/Öl-Wärmetauscher (31) ausgetauscht werden kann, und eine sekundäre Abzweigleitung (28) der primären Leitung (26) umfasst, die das stromaufwärtige Ende der primären Abzweigleitung (26) mit dem stromabwärtigen Ende der primären Abzweigleitung (26) verbindet, wobei der Kreislauf (24) darüber hinaus mindestens ein Ventil (22) zur Steuerung des Durchlaufs des Öldurchsatzes in der primären (26) und der sekundären (28) Abzweigleitung und Mittel (35) zur Steuerung der Öffnung des mindestens einen Ventils (22) bei einer Temperatur kleiner einer Schwellentemperatur umfasst, **dadurch gekennzeichnet, dass** die sekundäre Abzweigleitung (28) eine Länge aufweist, die mindestens um das Zehnfache kürzer als die Länge der primären Abzweigleitung (26) ist.

2. Baugruppe nach Anspruch 1, in welcher der Kreislauf ein einziges Ventil (22) umfasst, das am Auslass der primären Abzweigleitung (26) und stromabwärts hinter dem Auslass der sekundären Abzweigleitung (28) angeordnet ist.

3. Baugruppe nach einem der Ansprüche 1 bis 2, in der das Steuerventil (22) ein Ventil ist, das mindestens zwei Stellungen einnehmen kann, von denen eine erste, offene Stellung den Durchlass des Öls ermöglicht, und eine zweite, geschlossene Stellung den Durchlass des Öls durch das Ventil (22) blockiert.

4. Baugruppe nach einem der Ansprüche 1 bis 3, in der die Schwellentemperatur 70°C beträgt.

5. Baugruppe nach einem der Ansprüche 1 bis 4, in der das Steuerventil (22) ein Ein-Richtungsventil (22) mit zwei Wegen ist.

6. Baugruppe nach einem der Ansprüche 1 bis 5, in der die sekundäre Abzweigleitung (28) einen Durchmesser aufweist, der mindestens dreimal kleiner ist als der Durchmesser der primären Abzweigleitung (26).

7. Turbomaschine mit einer Baugruppe nach einem der Ansprüche 1 bis 6, wobei der Öl/Luft-\Närmetauscher eine Strömungsfläche eines Sekundärluftstroms radial nach außen begrenzt.

## Claims

1. An assembly (44) for a turbine engine (36), comprising an oil circuit (24) including an air/oil thermal exchanger (31), a primary bypass pipe (26) connecting an intake of the air/oil thermal exchanger (31) to an outlet of the air/oil thermal exchanger (31) and surrounding the air/oil thermal exchanger (31) so as to exchange heat with the air/oil thermal exchanger (31) and a secondary bypass pipe (28) of the primary pipe (26) connecting the upstream end of the primary bypass pipe (26) to the downstream end of the primary bypass pipe (26), the circuit (24) also comprising at least one valve (22) for controlling the passage of the flow of oil into the primary (26) and secondary (28) bypass pipes and means (35) for controlling the opening of said at least one valve (22) at a temperature lower than a threshold temperature, **characterized in that** said secondary bypass pipe (28) has a length at least ten times shorter than the length of the primary bypass pipe (26).

2. An assembly according to claim 1, wherein the circuit includes a single valve (22) arranged at the outlet of the primary bypass pipe (26) and downstream of the outlet of the secondary bypass pipe (28).

3. An assembly according to one of claims 1 to 2, wherein the control valve (22) is a valve adapted to adopt at least two positions including a first open position which allows the passage of oil and a second closed position which blocks the passage of oil through the valve (22) .

4. An assembly according to any one of claims 1 to 3, wherein the threshold temperature is 70°C.

5. An assembly according to any one of claims 1 to 4, wherein the control valve (22) is a unidirectional two-way valve (22).

6. An assembly according to any one of claims 1 to 5, wherein the secondary bypass pipe (28) has a diameter at least three times smaller than the diameter of the primary bypass pipe (26).

7. A turbine engine comprising an assembly according to any one of claims 1 to 6, wherein the oil/air thermal exchanger radially outwardly delimits a discharge surface of a secondary air flow.
